# EUROPÄISCHE PATENTSCHRIFT

(11) **EP 2 542 814 B1**
(45) Veröffentlichungstag und Bekanntmachung des Hinweises auf die Patenterteilung: **29.07.2015**
(21) Anmeldenummer: 11706175.4
(22) Anmeldetag: 19.02.2011
(51) Int. Cl.: F16L 33/22, F16L 37/091, F16L 37/138

(54) **ANSCHLUSSVORRICHTUNG FÜR EINE FLUIDLEITUNG**
CONNECTION DEVICE FOR A FLUID LINE
DISPOSITIF DE RACCORDEMENT POUR UNE CANALISATION HYDRAULIQUE

(30) Priorität: 04.03.2010 DE 102010010176
(43) Veröffentlichungstag der Anmeldung: 09.01.2013
(73) Patentinhaber: Festo AG & Co. KG, 73734 Esslingen (DE)
(72) Erfinder: WEISS, Martin, 73035 Göppingen (DE); HARTNAGEL, Rolf, 73732 Esslingen (DE); DECKER, Andreas, 73730 Esslingen (DE); GÖTZ, Florian, 73249 Wernau (DE)
(74) Vertreter: Patentanwälte Magenbauer & Kollegen Partnerschaft mbB
(86) Internationale Anmeldenummer: PCT/EP2011/000812
(87) Internationale Veröffentlichungsnummer: WO 2011/107223

(56) Entgegenhaltungen:
- EP-A2- 0 091 773
- DE-A1- 3 741 250
- DE-U1- 7 914 106
- FR-A1- 2 795 803
- US-A- 4 225 162

## Beschreibung

Die Erfindung betrifft eine Anschlussvorrichtung für eine Fluidleitung, mit einem Gehäusekörper, der über mindestens einen sich axial zwischen einem vorderen und einem rückseitigen Endbereich erstreckenden Anschlussabschnitt verfügt, an dessen Vorderseite eine das Einstecken einer anzuschließenden Fluidleitung ermöglichende Ausnehmung ausmündet und dessen vorderer Endbereich als Spannzange mit mehreren federelastisch radial verschwenkbaren Spannarmen ausgebildet ist, wobei auf dem Anschlussabschnitt eine zwischen einer Lösestellung und einer Klemmstellung axial verschiebbare Betätigungshülse angeordnet ist, die beim in einer Klemmrichtung erfolgenden axialen Verschieben in die Klemmstellung derart auf die Spannarme einwirkt, dass selbige zum Festhalten einer eingesteckten Fluidleitung nach radial innen verschwenkt werden, wobei die Betätigungshülse und die Spannarme in ihrer Gestaltung derart aufeinander abgestimmt sind, dass die Klemmrichtung der Verschiebebewegung der Betätigungshülse zum rückseitigen Endbereich des Anschlussabschnittes hin orientiert ist und die Betätigungshülse in der Klemmstellung näher beim rückseitigen Endbereich des Anschlussabschnittes liegt als in der Lösestellung, und wobei die Anschlussvorrichtung über Rastmittel verfügt, durch die die Betätigungshülse in der Klemmstellung und in der Lösestellung durch lösbare Verrastung bezüglich des Anschlussabschnittes axial fixiert ist.

Eine aus der DE 78 13 457 U1 bekannte Anschlussvorrichtung verfügt über einen Gehäusekörper mit einem länglichen Anschlussabschnitt, an dessen Vorderseite eine den Gehäusekörper durchsetzende Ausnehmung ausmündet. Der vordere Endbereich des Anschlussabschnittes ist als Spannzange konzipiert und zur Bildung mehrerer radial verschwenkbarer Spannarme mehrfach geschlitzt. Auf dem Anschlussabschnitt sitzt eine axial verschiebbare Betätigungshülse, die wahlweise in einer Lösestellung oder in einer Klemmstellung positionierbar ist. In der Klemmstellung werden die Spannarme von der Betätigungshülse nach innen gedrückt, so dass sie eine eingesteckte Fluidleitung festhalten. In der Lösestellung sind die Spannarme freigegeben, so dass eine Fluidleitung wahlweise eingesteckt oder herausgezogen werden kann.

Die Betätigungshülse und die Spannarme sind bei der bekannten Anschlussvorrichtung so aufeinander abgestimmt, dass die als Klemmrichtung bezeichenbare Richtung, in der die Betätigungshülse zum Verbringen in die Klemmstellung zu verschieben ist, zum vorderen Endbereich des Anschlussabschnittes hin orientiert ist. Somit ist die die Klemmstellung einnehmende Betätigungshülse sehr exponiert und kann bei unachtsamer Handhabung leicht versehentlich gelöst werden. Auch peitschende Druckluftschläuche bilden ein Potential für ein ungewolltes Verschieben der Betätigungshülse in die eine eingesteckte Fluidleitung freigebende Lösestellung.

Probleme der geschilderten Art können zwar gemäß DE 36 28 543 A1, DE 38 10 351 A1 und DE 102 49 958 B3 dadurch vermieden werden, dass die Betätigungshülse auf den Anschlussabschnitt der Anschlussvorrichtung aufgeschraubt ist und nur durch eine Drehbewegung betätigt werden kann. Da in diesen Fällen jedoch Gewinde hergestellt werden müssen, sind solche Anschlussvorrichtungen als relativ teuer in der Fertigung. Außerdem erweist sich die notwendige Drehbetätigung der Betätigungshülse als relativ zeitaufwendig.

Aus der DE 37 41 250 A1 ist eine Verbindungsvorrichtung nach dem Oberbegriff des Anspruchs 1 bekannt, die ein Verbindungselement mit zwei Anschlussstutzen aufweist und die dem Oberbegriff des Anspruchs 1 entspricht. Auf jeden Anschlussstutzen ist eine der anzuschließenden Leitungen aufsteckbar. Einer der Anschlussstutzen ist als Abschnitt eines Einsteckteils ausgebildet, das mit einem Steckabschnitt in ein den anderen Anschlussstutzen aufweisendes Aufnahmeteil des Verbindungselementes einsteckbar ist und in dem Aufnahmeteil über Rastmittel lösbar arretierbar ist.

Aus der DE 36 28 543 A1, DE 38 10 351 A1 und DE 102 49 958 B3 gehen Anschlussvorrichtungen für Fluidleitungen hervor, die über Betätigungshülsen verfügen, deren Klemmstellung näher beim rückseitigen Endbereich des Anschlussabschnittes liegt als die Lösestellung. Das Verlagern der Betätigungshülse zwischen ihren beiden Stellungen erfordert dort jedoch eine eher umständliche Schraubbetätigung.

Die EP 0 091 773 A2 offenbart eine Anschlussvorrichtung, deren Betätigungshülse zum Bewegen in die Klemmstellung auf einem Anschlussabschnitt in Richtung zum rückseitigen Endbereich des Anschlussabschnittes verschoben wird und die an ihrem Innenumfang einen Rastvorsprung aufweist, der in der Klemmstellung der Betätigungshülse in eine Vertiefung des Anschlussabschnittes eingreift.

Es ist die Aufgabe der vorliegenden Erfindung, eine Anschlussvorrichtung der eingangs genannten Art zu schaffen, die bei kostengünstiger Herstellung und einfacher Bedienbarkeit über eine hohe Betriebssicherheit verfügt.

Zur Lösung dieser Aufgabe ist vorgesehen, dass als Rastmittel ein einziger am Innenumfang der Betätigungshülse angeordneter Rastvorsprung und nur zwei am Außenumfang des Anschlussabschnittes ausgebildete Rastvertiefungen vorhanden sind, wobei die beiden Rastvertiefungen durch einen Bereich, der frei von Rastvertiefungen ist, axial beabstandet zueinander angeordnet sind und die Betätigungshülse durch lösbar verrastendes Eingreifen des einzigen Rastvorsprungs in entweder die eine oder die andere der beiden Rastvertiefungen die Klemmstellung oder die Lösestellung einnimmt

Somit kann die Anschlussvorrichtung zum Festhalten und Freigeben einer Fluidleitung durch eine einfache axiale Verschiebebewegung der Betätigungshülse betätigt werden. Dies ermöglicht eine zeitsparende Handhabung. In Ermangelung aufwendiger Gewinde kann die Anschlussvorrichtung zudem sehr kostengünstig hergestellt werden. Ein unbeabsichtigtes Lösen einer eingesteckten Fluidleitung kann gleichwohl vermieden werden, weil es hierzu einer ziehenden Beaufschlagung der Betätigungshülse bedarf. Die Klemmrichtung ist nach rückwärts gerichtet, so dass ein unbeabsichtigtes Stoßen gegen die Betätigungshülse keinen unerwünschten Lösevorgang auslösen kann. Abgesehen davon ermöglicht die Anschlussvorrichtung eine intuitive Betätigung, weil die Klemmrichtung mit der Einsteckrichtung der Fluidleitung und die hierzu entgegengesetzte Löserichtung mit der Entnahmerichtung der Fluidleitung zusammenfällt.

Eine besonders hohe Sicherheit gegen unbeabsichtigtes Verschieben der Betätigungshülse wird erreicht, indem die Betätigungshülse in der Klemmstellung und in der Lösestellung mit dem Anschlussabschnitt in lösbarer Weise verrastet ist. Somit kann eine in axialer Richtung formschlüssige Fixierung in sowohl der Klemmstellung als auch der Lösestellung gewährleistet werden.

Ein Verrasten in der Klemmstellung sorgt wirksam dafür, dass selbst bei Erschütterungen kein ungewolltes, selbsttätiges Verlagern der Betätigungshülse in die Lösestellung eintritt. Nur bei Aufbringen eines erhöhten ziehenden Kraftaufwandes kann die Betätigungshülse in die Lösestellung verbracht werden.

Ein lösbares Verrasten in der Lösestellung hat den Vorteil, dass die Betätigungshülse nicht reibungsbedingt von einem im Einstecken befindlichen Fluidschlauch mitgenommen wird und dann möglicherweise die radiale Beweglichkeit der Spannarme blockiert. Ein problemloses Einstecken der Fluidleitung ist mithin auch dann möglich, wenn die Betätigungshülse nicht zugleich mit einer Hand in der Lösestellung festgehalten wird.

Als Rastmittel zur Realisierung der lösbaren Rastverriegelungen ist seitens der Betätigungshülse ein einziger an deren Innenumfang angeordneter Rastvorsprung vorgesehen, bei dem es sich zweckmäßigerweise um einen zur Betätigungshülse koaxialen Ringvorsprung handelt. Damit die Betätigungshülse sowohl in der Lösestellung als auch in der Klemmstellung verrastbar ist, sind nur zwei axial beabstandete Rastvertiefungen am Außenumfang des Anschlussabschnittes vorhanden, in die der mindestens eine Rastvorsprung der Betätigungshülse alternativ eingreifen kann.

Vorteilhafte Weiterbildungen der Erfindung gehen aus den Unteransprüchen hervor.

Die Spannarme verfügen an ihrer radialen Außenseite zweckmäßigerweise über jeweils mindestens eine zur Rückseite der Anschlussvorrichtung hin schräg nach außen ansteigende Betätigungsfläche, auf die die Betätigungshülse mit einer an ihrem Innenumfang ausgebildeten Betätigungsschulter einwirkt, wenn sie in die Klemmstellung verschoben wird. Die Betätigungsschulter gleitet an der schrägen Beaufschlagungsfläche entlang, so dass der betreffende Spannarm radial beaufschlagt und nach innen, in Richtung zum Außenumfang einer eingesteckten Fluidleitung, bewegt wird.

Zweckmäßigerweise befindet sich am Innenumfang der Betätigungshülse eine koaxial angeordnete Ringschulter, die die einzelnen Betätigungsschultern bildet. Ein Vorteil dieser Ausgestaltung besteht darin, dass es keiner besonderen winkelmäßigen Ausrichtung zwischen der Betätigungshülse und der Spannzange und mithin keiner Verdrehsicherung der Betätigungshülse bedarf.

Die schrägen Beaufschlagungsflächen befinden sich zweckmäßigerweise an zahnartigen Beaufschlagungsvorsprüngen, die an ihrem der Rückseite des Anschlussabschnittes zugewandten Endbereich mit einer rückwärtigen Abschlusskante enden. Auf diese Weise ergibt sich eine Stufe im Übergangsbereich zwischen den Beaufschlagungsvorsprüngen und dem sich anschließenden Längsabschnitt des betreffenden Spannarmes.

Letzteres ist vor allem dann von besonderem Vorteil, wenn sich an jede Betätigungsschulter nach axial vorne hin eine nach radial innen weisende Haltefläche anschließt, wobei der Übergang zwischen der Betätigungsschulter und der Haltefläche durch eine Betätigungskante markiert ist. Beim Verschieben in der Klemmrichtung gleitet die Betätigungsschulter mit ihrer Betätigungskante an der schrägen Beaufschlagungsfläche ab, um letztere schließlich rückseitig zu verlassen, noch bevor die Betätigungshülse ihre Klemmstellung erreicht hat. Die radiale Beaufschlagung des Spannarmes wird dann von der Haltefläche übernommen, die von radial außen her an der Abschlusskante des Beaufschlagungsvorsprunges anliegt und selbigen nach radial innen gedrückt hält. Die sich hierbei durch den federelastisch ausgelenkten Spannarm aufbauende Rückstellkraft kann, da sie lediglich in einer zur Verschieberichtung rechtwinkeligen Richtung auf die Betätigungshülse einwirkt, keine axialen Verstellkräfte auf die Betätigungshülse ausüben, so dass selbige nicht selbsttätig in die Lösestellung zurückkehren kann.

Eine sehr präzise Linearbewegung der Betätigungshülse kann dadurch gewährleistet werden, dass an mindestens einem und zweckmäßigerweise an allen Spannarmen radial außen ein Stabilisierungsvorsprung angeordnet ist, der zur radialen Abstützung der Betätigungshülse bei ihrer Verschiebebewegung beitragen kann. Der Führungsvorsprung ist zweckmäßigerweise mit axialem Abstand zur Beaufschlagungsfläche angeordnet, so dass zweckmäßigerweise zwischen ihm und dem gegebenenfalls vorhandenen Beaufschlagungsvorsprung ein axialer Zwischenraum vorliegt.

Prinzipiell könnte die Betätigungshülse so ausgeführt sein, dass zu keiner Zeit eine radiale Überlappung mit der vorderen Stirnfläche der Spannzange gegeben ist. Allerdings wird es als vorteilhaft angesehen, wenn die Stirnflächen der Spannarme durch die Betätigungshülse abgedeckt werden, was insbesondere dadurch realisierbar ist, dass für die Betätigungshülse eine becherförmige Gestalt gewählt wird und ein mittig durchbrochener Bodenabschnitt der Betätigungshülse eine der Spannzange axial außen vorgelagerte Position einnimmt. Der Durchmesser der Bodendurchbrechung wird insbesondere so gewählt, dass er im Wesentlichen dem Außendurchmesser der anzuschließenden Fluidleitung entspricht, so dass bei eingesteckter Fluidleitung ein Eindringen von Verunreinigungen durch die Bodendurchbrechung hindurch in den Bereich der Spannzange wirksam vermieden oder zumindest reduziert werden kann. Es besteht die Möglichkeit, mehrere Betätigungshülsen bereitzustellen, die sich im Durchmesser ihrer Bodendurchbrechung voneinander unterscheiden, um eine individuelle Anpassung an den Außendurchmesser alternativ anschließbarer Fluidleitungen vornehmen zu können.

Eine weitere zweckmäßige Ausgestaltung der Anschlussvorrichtung sieht vor, dass die Betätigungshülse bei Einnahme der Klemmstellung mit ihrer rückseitigen Stirnfläche an einer nach vorne weisenden Schulterfläche anliegt, die ortsfest bezüglich dem Anschlussabschnitt ausgebildet ist. Vorzugsweise ist die Schulterfläche ein direkter Bestandteil des Anschlussabschnittes und wird insbesondere von einer ringförmigen Abstufung des Außenumfanges des Anschlussabschnittes gebildet.

Durch diese Maßnahme kann zum einen erreicht werden, dass die Betätigungshülse zum Zurückziehen in die Lösestellung nur am Außenumfang erfasst werden kann. Eine versehentliche Krafteinleitung in die rückwärtige Stirnfläche kann vermieden werden.

Außerdem erweist sich eine derart ausgebildete Anschlussvorrichtung als besonders prädestiniert für Anwendungen in einer Umgebung, in der es auf besondere Reinlichkeit ankommt. Durch einen zweckmäßigerweise vorhandenen direkten Kontakt zwischen der Betätigungshülse und der Schulterfläche des Anschlussabschnittes wird ein Zwischenraum vermieden, in dem sich Verunreinigungen ablagern könnten.

Je nach Einbausituation kann die Anschlussvorrichtung auch so ausgebildet sein, dass die mit der rückseitigen Stirnfläche der Betätigungshülse kooperierende Schulterfläche kein direkter Bestandteil der Anschlussvorrichtung ist, sondern sich an einem Trägerbauteil befindet, an dem die Anschlussvorrichtung befestigt ist.

In allen Fällen kann die Betätigungshülse nach Art einer Schutzhaube fungieren, die die Spannzange und weitere Bereiche des Anschlussabschnittes zur Umgebung hin abdeckt und abschirmt.

Der Gehäusekörper ist zweckmäßigerweise in axialer Richtung abgestuft und verfügt rückseitig im Anschluss an den Anschlussabschnitt über einen einen diesbezüglich kleineren Außenquerschnitt aufweisenden Befestigungsabschnitt, der beispielsweise zur Einpressbefestigung oder zur Schraubbefestigung an einem beliebigen Trägerbauteil ausgelegt sein kann. Bei dem Trägerbauteil handelt es sich beispielsweise um einen fluidbetätigten Antrieb, ein Ventil oder eine sonstige fluidtechnische Komponente.

Um eine eingesteckte Fluidleitung besonders sicher zu fixieren, können die Spannarme an ihrer der Ausnehmung radial zugewandten Innenseite über jeweils mindestens einen nach radial innen vorstehenden Haltevorsprung verfügen. Dieser Haltevorsprung kann, wenn die Spannarme durch die Betätigungshülse nach innen gedrückt werden, in den Außenumfang der eingesteckten Fluidleitung eindrücken oder, insbesondere bei einer Metallausführung der Fluidleitung, in eine am Außenumfang der Fluidleitung ausgebildete Haltenut eingreifen.

Vorteilhaft ist in diesem Zusammenhang eine dahingehende Weiterbildung, dass die besagten Haltevorsprünge jeweils über mindestens ein Filmscharnier in verschwenkbarer Weise an dem von der Betätigungshülse beaufschlagbaren Abschnitt des betreffenden Spannarmes verschwenkbar gelagert sind. Die Schwenkbarkeit ermöglicht ein Verschwenken des betreffenden Haltevorsprunges vor und zurück in der Achsrichtung der Ausnehmung. Beim Einschieben einer Fluidleitung werden die Haltevorsprünge nach hinten und zugleich nach radial außen verschwenkt und legen sich an den Außenumfang der Fluidleitung an. Erfährt die Fluidleitung im Betrieb dann eine nach axial außen orientierte Zugkraft, werden die verschwenkbaren Haltevorsprünge ein kleines Stück weit mitgenommen und dabei nach vorne verschwenkt, wobei sie sich zunehmend stärker mit dem Außenumfang der Fluidleitung verspannen und somit die radiale Klemmwirkung auf die Fluidleitung verstärkt wird.

Durch eine solche Maßnahme kann insbesondere auch bei einer pulsierenden Innendruckbeaufschlagung der Fluidleitung eine hohe Festhaltesicherheit gewährleistet werden.

Alle möglichen Varianten der Anschlussvorrichtung lassen sich mit relativ wenigen Teilen kostengünstig und einfach herstellen. Die Materialwahl ist prinzipiell beliebig, Varianten aus Kunststoffmaterial sind ebenso denkbar wie Edelstahlbauformen. Abgesehen von einfachen Varianten, die über nur einen einzigen Anschlussabschnitt für eine Fluidleitung verfügen, sind auch Mehrfachvarianten denkbar, beispielsweise in Form sogenannter T-Stücke oder Y-Stücke.

Nachfolgend wird die Erfindung anhand der beiliegenden Zeichnung näher erläutert. In dieser zeigen:
- Figur 1: eine bevorzugte erste Ausführungsform der erfindungsgemäßen Anschlussvorrichtung in einer perspektivischen Ansicht in der Lösestellung der Betätigungshülse,
- Figur 2: die Anschlussvorrichtung aus Figur 1 in einer perspektivischen Ansicht in der Klemmstellung der Betätigungshülse,
- Figur 3: einen Längsschnitt durch die Anschlussvorrichtung aus Figur 1 bei in der Lösestellung befindlicher Betätigungshülse und unmittelbar vor dem Einstecken einer Fluidleitung,
- Figur 4: einen Längsschnitt durch die Anschlussvorrichtung aus Figur 2 im eingesteckten und festgeklemmten Zustand einer Fluidleitung,
- Figur 5: den Längsschnitt aus Figur 3 in einer perspektivischen Ansicht,
- Figur 6: den Längsschnitt aus Figur 4 in einer perspektivischen Ansicht,
- Figur 7: den in Figur 3 strichpunktiert umrahmten Ausschnitt VII der Spannzange in einer modifizierten Ausführungsform mit verschwenkbar gelagerten Haltevorsprüngen, und
- Figur 8: die Anordnung aus Figur 7 im bezüglich der Figur 7 verschwenkten Zustand des abgebildeten Haltevorsprunges.

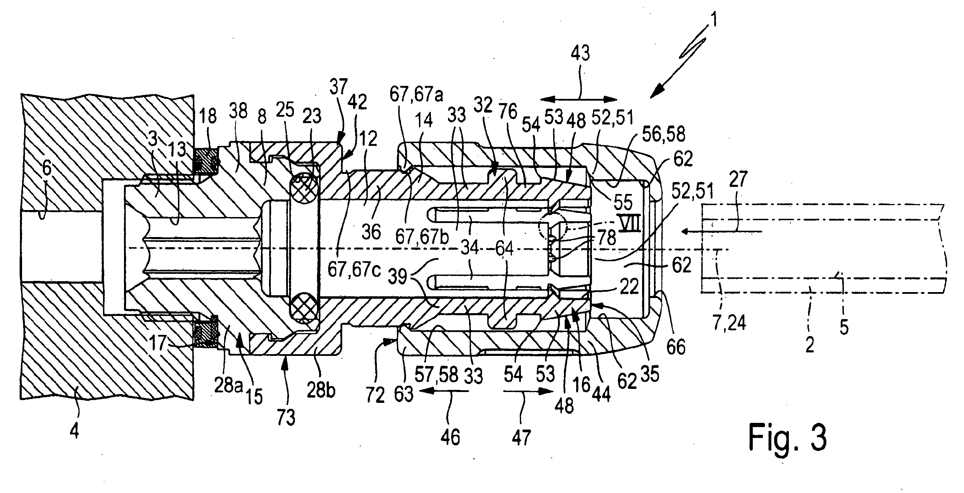

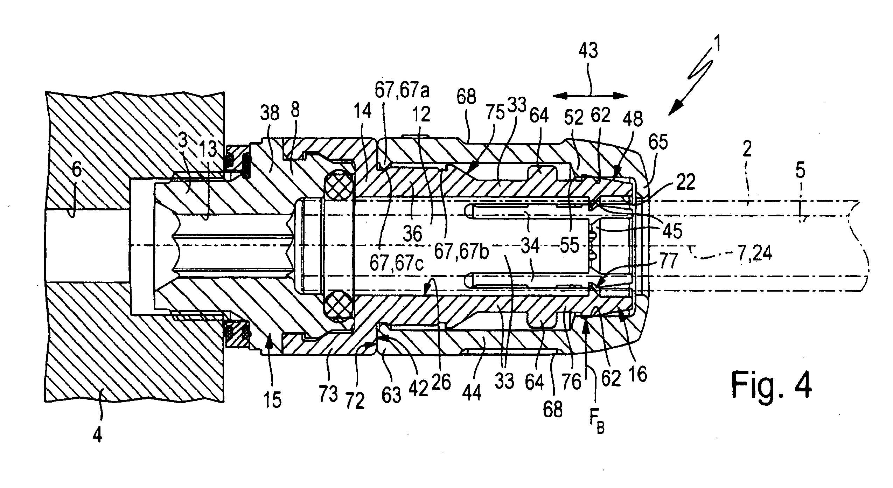

Die in ihrer Gesamtheit mit Bezugsziffer 1 bezeichnete Anschlussvorrichtung ermöglicht ein insbesondere fluiddichtes Anschließen einer in Figur 3 vor dem Anschließen und in Figur 4 im angeschlossenen Zustand gezeigten Fluidleitung 2. Die Fluidleitung 2 ist insbesondere ein elastischer Fluidschlauch, kann aber beispielsweise auch als starres Rohr oder Rohrabschnitt ausgebildet sein und hierbei dann insbesondere auch aus Metall bestehen.

Die Anschlussvorrichtung 1 ist zweckmäßigerweise mit einem Befestigungsabschnitt 3 versehen, der ihre Montage, ob lösbar oder unlösbar, an einem in Figuren 3 und 4 schematisch angedeuteten Trägerbauteil 4 ermöglicht. Das Trägerbauteil 4 ist beispielsweise ein Gehäuse einer fluidtechnischen Komponente, beispielsweise eines Ventils oder eines fluidbetätigten Antriebes. Im an die Anschlussvorrichtung 1 angeschlossenen Zustand der Fluidleitung 2 wird durch die Anschlussvorrichtung 1 hindurch eine Fluidverbindung zwischen dem in der Fluidleitung 2 ausgebildeten Leitungskanal 5 und einem Bauteilkanal 6 des Trägerbauteils 4 hergestellt.

Die Anschlussvorrichtung 1 verfügt über einen beim Ausführungsbeispiel länglichen, eine Längsachse 7 aufweisenden Gehäusekörper 8, der in seiner Längsrichtung von einer Ausnehmung 12 durchsetzt ist. In die Ausnehmung 12 ist gemäß Figur 4 die angeschlossene Fluidleitung 2 eingesteckt. Ein sich an die eingesteckte Fluidleitung 2 anschließender Längenabschnitt der Ausnehmung 12 bildet einen Fluidkanal 13, der die Verbindung zwischen dem Leitungskanal 5 und dem Bauteilkanal 6 herstellt. Er mündet rückseitig an dem Befestigungsabschnitt 3 aus.

Der Befestigungsabschnitt 3 ist beim Ausführungsbeispiel von einem rückseitigen Endabschnitt des Gehäusekörpers 8 gebildet. Er verfügt zweckmäßigerweise über ein Außengewinde, mit dem er in das Trägerbauteil 4 einschraubbar ist. Alternativ kann er beispielsweise auch zur Herstellung einer unlösbaren Einpressverbindung ausgestaltet sein.

An den Befestigungsabschnitt 3 schließt sich in axialer Richtung zu der in den Abbildungen rechts liegenden Vorderseite des Gehäusekörpers 8 hin ein Anschlussabschnitt 14 des Gehäusekörpers 8 an. Der Anschlussabschnitt 14 hat einen zum Befestigungsabschnitt 3 hin orientierten rückseitigen Endbereich 15 und einen diesbezüglich axial entgegengesetzten vorderen Endbereich 16. Zweckmäßigerweise ist der Außenquerschnitt des Anschlussabschnittes 14 größer als derjenige des Befestigungsabschnittes 3, so dass der Übergangsbereich zwischen dem Anschlussabschnitt 14 und dem Befestigungsabschnitt 3 abgestuft ist. Bedingt durch diese Abstufung verfügt der Anschlussabschnitt 14 an seiner Rückseite über eine nach rückwärts orientierte, dem gegebenenfalls vorhandenen Trägerbauteil 4 zugewandte ringförmige rückseitige Stirnfläche 17.

Um eine fluiddichte Verbindung zwischen der Anschlussvorrichtung 1 und dem Trägerbauteil 4 zu erhalten, kann auf den Befestigungsabschnitt 3 eine ringförmige Dichtung 18 koaxial aufgesetzt sein, die bei montierter Anschlussvorrichtung 1 einerseits an der rückwärtigen Stirnfläche 17 des Anschlussabschnittes 14 und andererseits an einer gegenüberliegenden Fläche des Trägerbauteils 4 dichtend anliegt.

Die Ausnehmung 12 mündet stirnseitig vorne am vorderen Endbereich 16 des Anschlussabschnittes 14 mit einer vorderen Mündung 22 aus.

Der Anschlussabschnitt 14 hat eine Längsachse 24, die zweckmäßigerweise mit der Längsachse 7 des Gehäusekörpers 8 zusammenfällt.

Im Innern der Ausnehmung 12 befindet sich ein diesbezüglich konzentrisch angeordneter Dichtungsring 23. Er ist beispielsweise in einer nutartigen Erweiterung 25 der Ausnehmung 12 gehalten und ragt radial ein Stück weit nach innen über die die Ausnehmung 12 umfangsseitig begrenzende Mantelfläche 26 vor. Der Dichtungsring 23 befindet sich zweckmäßigerweise in dem rückseitigen Endbereich 15 des Anschlussabschnittes 14.

Eine anzuschließende Fluidleitung 2 wird in einer Einsteckrichtung 27 von vorne her durch die vordere Mündung 22 hindurch in die Ausnehmung 12 eingesteckt und soweit eingeschoben, bis sie auch den Dichtungsring 23 durchsetzt, der somit unter radialer Vorspannung dichtend am Außenumfang der Fluidleitung 2 zur Anlage gelangt.

Insbesondere zur leichten Montage des Dichtungsringes 23 kann der Gehäusekörper 8 mehrteilig aufgebaut sein. Exemplarisch ist er am rückwärtigen Endbereich 15 des Anschlussabschnittes 14 axial unterteilt und verfügt über einen rückseitigen Gehäuseabschnitt 28a sowie einen daran durch eine Steckmontage fixierten vorderen Gehäuseabschnitt 28b. Die beiden Gehäuseabschnitte 28a, 28b sind zweckmäßigerweise durch Verrastung in insbesondere unlösbarer Weise miteinander verbunden. Der Fügebereich zwischen den beiden Gehäuseabschnitten 28a, 28b erstreckt sich durch die nutartige Erweiterung 25 hindurch, so dass selbige vor dem Zusammenbau der beiden Gehäuseabschnitte 28a, 28b zugänglich ist, um den Dichtungsring 23 einlegen zu können.

In seinem vorderen Endbereich 16 ist der Anschlussabschnitt 14 als Spannzange 32 ausgebildet. Sie besteht aus mehreren sich jeweils axial erstreckenden und in der Umfangsrichtung um die Längsachse 24 herum verteilten Spannarmen 33.

Zwischen in der Umfangsrichtung unmittelbar aufeinanderfolgenden Spannarmen 33 befindet sich jeweils ein schlitzförmiger Zwischenraum 34, der die Wandung des Anschlussabschnittes 14 radial durchsetzt und zu der die vordere Mündung 22 umschließenden ringförmigen, vorderen Stirnfläche 35 des Anschlussabschhittes 14 ausmündet.

Rückseitig, also zu dem rückseitigen Endbereich 15 hin, schließt sich an die Spannzange 32 ein ringförmiger, ungeschlitzter Basisabschnitt 36 des Anschlussabschnittes 14 an. Er trägt die Spannarme 33, die hierzu zweckmäßigerweise einstückig mit dem Basisabschnitt 36 verbunden sind.

An den Basisabschnitt 36 schließt sich rückseitig über eine ringförmige Abstufung 37 ein beim Ausführungsbeispiel den rückseitigen Endbereich 15 definierender Fußabschnitt 38 des Anschlussabschnittes 14 an.

Der Fußabschnitt 38 ist wie der Basisabschnitt 36 außen zweckmäßigerweise zylindrisch gestaltet und hat einen größeren Außendurchmesser als der Basisabschnitt 36. Aus diesem Umstand resultiert eine an dem Fußabschnitt 38 angeordnete, axial nach vorne in Richtung zu dem vorderen Endbereich 16 orientierte ringförmige Stirnfläche, die im Folgenden als Schulterfläche 42 bezeichnet sei.

Koaxial auf dem Anschlussabschnitt 14 sitzt eine diesbezüglich gemäß Doppelpfeil 43 axial hin und her verschiebbare Betätigungshülse 44. Genauer gesagt ist die Betätigungshülse 44 zweckmäßigerweise auf der Spannzange 32 und dem sich daran rückseitig anschließenden Basisabschnitt 36 angeordnet und axial verschieblich gelagert.

Die Spannarme 33 sind in radialer Richtung federelastisch verschwenkbar. Beim Verschwenken werden sie im Wesentlichen in ihrem Übergangsbereich 39 zu dem Basisabschnitt 36 abgebogen. Die Federelastizität ergibt sich aus der Materialwahl und/oder Dimensionierung.

Insbesondere im Bereich der vorderen Mündung 22 ist jeder Spannarm 33 an seiner der Ausnehmung 12 zugewandten radialen Innenfläche mit mindestens einem bevorzugt zahnförmig gestalteten Haltevorsprung 45 versehen. Der Haltevorsprung 45 ist mit axialem Abstand zum Übergangsbereich 39 zwischen der Spannzange 32 und dem Basisabschnitt 36 platziert.

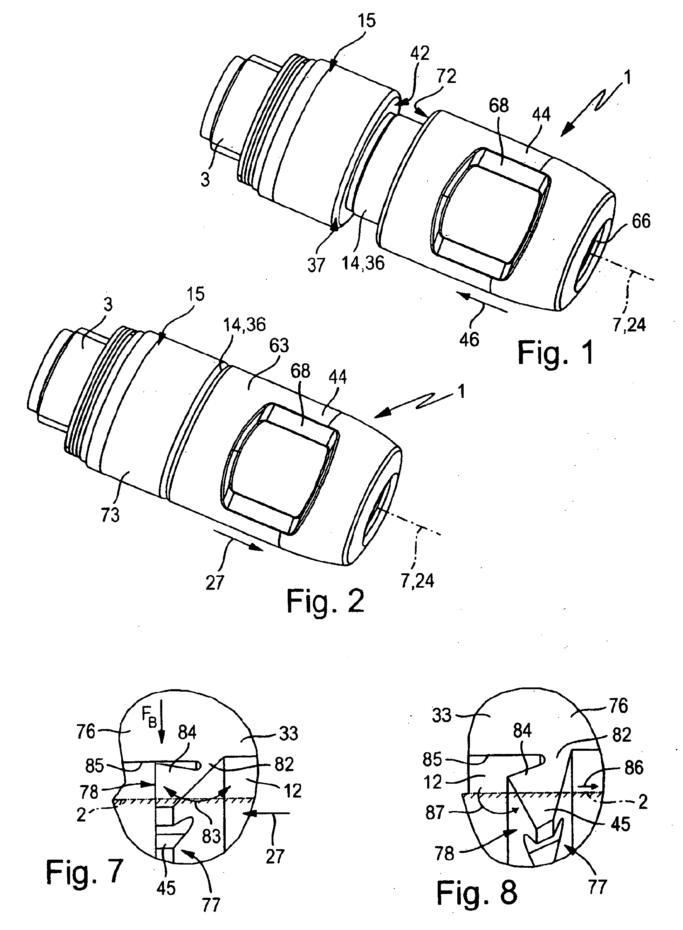

Im Rahmen der Verschiebebewegung 43 kann die Betätigungshülse 44 wahlweise in einer aus Figuren 1, 3 und 5 ersichtlichen Lösestellung und einer aus Figuren 2, 4 und 6 ersichtlichen Klemmstellung positioniert werden. In der Lösestellung übt sie auf die Spannarme 33 keine oder eine nur geringe radiale Betätigungskraft aus. Die Spannarme 33 befinden sich daher in ihrer Offenstellung, in der der von ihnen umgrenzte Querschnitt der Ausnehmung 12 ausreichend groß ist, um die Fluidleitung 2 ohne oder mit nur geringem Widerstand einstecken oder herausziehen zu können.

Die Spannarme 33 sind zweckmäßigerweise so ausgelegt, dass der durch sie in der Offenstellung umgrenzte Durchmesser etwas kleiner ist als der Außendurchmesser der Fluidleitung 2, so dass die Spannarme 33 beim Einschieben der Fluidleitung 2 geringfügig nach radial außen ausweichen können und auch schon in der Lösestellung der Betätigungshülse 44 mit leichter Vorspannung am Außenumfang der eingesteckten Fluidleitung 2 anliegen.

In der Klemmstellung übt die Betätigungshülse 44 auf sämtliche Spannarme 33 eine radial in Richtung zum Zentrum der Ausnehmung 12 orientierte Betätigungskraft F_{B} aus, so dass die Spannarme 33 aus ihrer Offenstellung in eine Schließstellung verschwenkt sind, in der sie klemmend an den Außenumfang der eingesteckten Fluidleitung 2 angedrückt werden. Dies führt zweckmäßigerweise auch zu einem Verkrallen der Haltevorsprünge 45 in der nachgiebigen Wandung der Fluidleitung 2, so dass letztere nicht mehr aus der Ausnehmung 12 herausgezogen werden kann.

Soll nach dem gleichen Muster eine starre Fluidleitung 2 fixiert werden, sieht man an deren Außenumfang zweckmäßigerweise eine umlaufende Nut vor, in die die Haltevorsprünge 35 formschlüssig eingreifen können.

Die Verschieberichtung, in der die Betätigungshülse 44 beim Übergang von der Lösestellung in die Klemmstellung verlagert wird, sei als Klemmrichtung 46 bezeichnet. Das Verlagern der Betätigungshülse 44 aus der Klemmstellung in die Lösestellung erfolgt in einer im Folgenden als Löserichtung 47 bezeichneten, axial entgegengesetzten Richtung.

Ein Vorteil der Anschlussvorrichtung 1 besteht darin, dass die Klemmrichtung 46 der Betätigungshülse 44 zum rückseitigen Endbereich 15 des Anschlussabschnittes 14 hin orientiert ist, also mit der Einsteckrichtung 27 der anzuschließenden Fluidleitung 2 gleichgerichtet ist. Dies hat zur Folge, dass die Betätigungshülse 44 in der Lösestellung einen größeren axialen Abstand vom rückseitigen Endbereich 15 des Anschlussabschnittes 14 aufweist als in der Klemmstellung. Erreicht wird diese Funktionalität durch eine entsprechend aufeinander abgestimmte Gestaltung der Betätigungshülse 44 und der Spannarme 33 der Spannzange 32.

Zweckmäßigerweise beinhaltet die vorgenannte Gestaltung mindestens eine an jedem Spannarm 33 angeordnete schräge Beaufschlagungsfläche 48 sowie mehrere jeweils einer dieser schrägen Beaufschlagungsflächen 48 zugeordnete Betätigungsschultern 52, die an der Betätigungshülse 44 angeordnet sind.

Die schrägen Beaufschlagungsflächen 48 befinden sich an der radialen Außenseite der Spannarme 33, und zwar insbesondere an dem vorderen Endbereich 16 und hierbei zweckmäßigerweise unmittelbar im Anschluss an die vordere Stirnfläche 35.

Exemplarisch verfügt dort jeder Spannarm 33 über einen zahnartig und insbesondere sägezahnartig ausgebildeten, nach radial außen vorstehenden Beaufschlagungsvorsprung 53, der die zugeordnete schräge Beaufschlagungsfläche 48 definiert. Die schrägen Beaufschlagungsflächen 48 erstrecken sich schräg nach rückwärts und zugleich nach radial außen, wobei sie zweckmäßigerweise an einer der vorderen Stirnfläche 35 entgegengesetzten rückwärtigen Abschlusskante 54 des jeweiligen Beaufschlagungsvorsprunges 53 enden.

In einer axialen Ansicht mit Blick in der Einsteckrichtung 27, haben die Beaufschlagungsvorsprünge 53 und die daran angeordneten schrägen Beaufschlagungsflächen 48 eine bogenförmig gekrümmte Gestalt.

Die mit den Beaufschlagungsflächen 48 kooperierenden Betätigungsschultern 52 befinden sich vorzugsweise am Innenumfang der Betätigungshülse 44. Die Betätigungshülse 44 hat dort zweckmäßigerweise eine zu ihrer Längsachse konzentrische Ringschulter 51, die die diversen Betätigungsschultern 52 bildet. Ein Vorteil dieser Bauform besteht darin, dass die Betätigungsschultern 52 in der Umfangsrichtung der Betätigungshülse 44 nicht voneinander abgesetzt sind und folglich unabhängig von der winkelmäßigen Ausrichtung der Betätigungshülse 44 jeder Beaufschlagungsfläche 48 stets eine Betätigungsschulter 52 zugeordnet ist.

Die Betätigungsschultern 52 unterteilen den Innenumfang der Betätigungshülse 44 in einen vorderen Bereich 56 kleineren Durchmessers und einen hinteren Bereich 57 größeren Durchmessers. Eine als Betätigungskante 55 bezeichnete Kante markiert den Übergangsbereich zwischen der jeweiligen Betätigungsschulter 52 und dem sich nach vorne hin anschließenden vorderen Bereich 56, wobei letzterer zweckmäßigerweise die Form einer Innenmantelfläche 58 eines Hohlzylinders aufweist.

An jede Betätigungskante 55 schließt sich axial nach vorne hin eine im Querschnitt bevorzugt kreisbogenförmig gekrümmte Haltefläche 62 an, so dass eine der Anzahl der Betätigungsschulter 52 entsprechende Anzahl von Halteflächen 62 vorhanden ist. Die Halteflächen 62 sind zweckmäßigerweise von aufeinanderfolgenden Umfangsabschnitten der vorgenannten ringförmigen Innenmantelfläche 58 gebildet.

In der Lösestellung sind die Betätigungsschultern 52 den schrägen Beaufschlagungsflächen 48 axial vorne vorgelagert. Die die Beaufschlagungsflächen 48 rückseitig begrenzenden Abschlusskanten 54 liegen dabei radial weiter außen wie die Betätigungskanten 55. Wird nun die Betätigungshülse 44 in der Klemmrichtung 46 axial verschoben, treffen die Betätigungskanten 55 auf die Beaufschlagungsflächen 48 und laufen diesen entlang, wobei die hierdurch auf die Beaufschlagungsvorsprünge 53 ausgeübte Betätigungskraft F_{B} das schon erwähnte Verschwenken der Spannarme 33 nach radial innen veranlasst.

Der maximale Spannhub und mithin die maximale Spannkraft der Spannarme 33 ist dann erreicht, wenn die Betätigungskanten 55 die Abschlusskanten 54 erreicht haben. Hierbei handelt es sich zweckmäßigerweise jedoch nur um eine Zwischenstellung der Betätigungshülse 44. Die endgültige Klemmstellung liegt erst dann vor, wenn die Betätigungskanten 55 die Abschlusskanten 54 passiert haben und somit die Halteflächen 62 über den Abschlusskanten 54 zu liegen kommen, wie dies beispielsweise in Figur 4 illustriert ist.

Letzteres hat den Vorteil, dass die von den Spannarmen. 33 aufgrund ihrer Verformung aufgebauten, nach radial außen wirkenden Rückstellkräfte nicht in der Lage sind, in der Löserichtung 47 wirksame Stellkräfte auf die Betätigungshülse 44 auszuüben. Die Betätigungshülse 44 wird durch die Abschlusskanten 54 lediglich in exakt radialer Richtung und ohne axiale Schubkomponente beaufschlagt.

Bei ihrer Verschiebebewegung 43 wird die Betätigungshülse 44 zweckmäßigerweise durch den Außenumfang des Anschlussabschnittes 14 verkantungssicher geführt. Exemplarisch geschieht dies dadurch, dass die Betätigungshülse 44 mit ihrem rückwärtigen Endbereich 63 gleitverschieblich auf dem Außenumfang des Basisabschnittes 36 gelagert ist.

Zusätzlich verfügen alle Spannarme 33 an ihrer von der Betätigungshülse 44 umgriffenen radialen Außenseite über je einen Stabilisierungsvorsprung 64, der gleitend mit dem hinteren Bereich 57 des Innenumfanges der Betätigungshülse 44 zusammenwirken kann. Die Stabilisierungsvorsprünge 64 sorgen unter anderem auch dafür, dass die Betätigungshülse 44 bei Einnahme der Lösestellung eine zu der Ausnehmung 12 koaxiale Lage einnimmt und nicht verkanten kann.

Die Stabilisierungsvorsprünge 64 sind beim Ausführungsbeispiel insofern von Vorteil, als hier die Betätigungshülse 44 bei Einnahme ihrer Lösestellung den Anschlussabschnitt 14 an seiner Vorderseite axial überragt. Die Betätigungshülse 44 steht also in der Lösestellung über die vordere Stirnfläche 35 des Anschlussabschnittes 14 über, wobei in der Regel kein Kontakt zwischen den Betätigungsschultern 52 und den Beaufschlagungsflächen 48 vorliegt, um die radiale Beweglichkeit der Spannarme 33 beim Einschieben der Fluidleitung 2 nicht unnötig zu beeinträchtigen.

Die Anordnung ist insbesondere so getroffen, dass die Halteflächen 62 in der Lösestellung der Betätigungshülse 44 der Spannzange 33 axial vorne vorgelagert sind.

Für die Betätigungshülse 44 empfiehlt sich eine im Wesentlichen becherförmige Gestaltung, und zwar mit einem an der Vorderseite angeordneten Bodenabschnitt 65, der von einer mittigen Bodendurchbrechung 66 durchsetzt ist. Der Durchmesser der Bodendurchbrechung 66 entspricht zweckmäßigerweise im Wesentlichen dem Durchmesser der Ausnehmung 12 und ist mithin an den Außendurchmesser der anzuschließenden Fluidleitung 2 angepasst.

Der Bodenabschnitt 65 ist somit der vorderen Stirnfläche 35 vorgelagert und schirmt, gemeinsam mit der eingesteckten Fluidleitung 2, die Spannzange 32 gegenüber außen anfallenden Verunreinigungen ab.

Wenn die Spannarme 33 eine ausreichend große radiale Verformungsfähigkeit aufweisen, können in der Spannzange 32 bei Bedarf Fluidleitungen 2 unterschiedlicher Außendurchmesser festgeklemmt werden. Damit dann bei Fluidleitungen 2 kleineren Durchmessers im Bereich der zu der Mündung 22 koaxialen Bodendurchbrechung 66 kein Ringspalt verbleibt, können auf den Anschlussabschnitt 14 wahlweise unterschiedliche Betätigungshülsen 44 montiert werden, die sich im Durchmesser ihrer Durchbrechung 66 unterscheiden, wobei jeweils eine solche Betätigungshülse 44 gewählt wird, deren Bodendurchbrechung 66 einen dem Außendurchmesser der Fluidleitung 2 entsprechenden Durchmesser besitzt.

Bei Bedarf kann an dem Bodenabschnitt 65 auch noch eine die Bodendurchbrechung 66 umrahmende Dichtung angebracht werden, die radial elastisch ist, um mit Vorspannung an der eingesteckten Fluidleitung 2 anzuliegen.

Es ist zweckmäßig, wenn Maßnahmen getroffen sind, die eine lösbare Verrastung der Betätigungshülse 44 bezüglich dem Anschlussabschnitt 14 in der Klemmstellung und/oder in der Lösestellung bewirken. Beim Ausführungsbeispiel ist bei beiden Stellungen der Betätigungshülse 44 eine ein unbeabsichtigtes axiales Verschieben verhindernde Rastfixierung gegeben.

Die Verrastung in der Klemmstellung hat den Vorteil, dass die Betätigungshülse 44 auch bei starken Erschütterungen sicher an Ort und Stelle verbleibt. Die Verrastung in der Lösestellung hat den Vorteil, dass die Betätigungshülse 44 beim Hindurchschieben der Fluidleitung 2 nicht durch Reibungskräfte mitgenommen wird, was die Aufweitung der Spannarme. 33 be hindern könnte.

Die zur Verrastung beitragenden Rastmittel 67 sind seitens der Betätigungshülse 44 zweckmäßigerweise an deren rückwärtigem Endbereich 63 und seitens des Anschlussabschnittes 14 an dessen Basisabschnitt 36 angeordnet.

Die an der Betätigungshülse 44 angeordneten Rastmittel 67 bestehen aus einem konzentrisch am Innenumfang angeordneten, nach radial innen ragenden ringförmigen Rastvorsprung 67a. An dem Anschlussabschnitt 14 sind als Rastmittel 67 am Außenumfang des Basisabschnittes 36 zwei axial mit Abstand zueinander und koaxial zu der Ausnehmung 12 angeordnete erste und zweite ringförmige Rastvertiefungen 67b, 67c ausgebildet. Von den beiden Rastvertiefungen 67b, 67c definiert die erste Rastvertiefung 67b die Lösestellung und die zweite Rastvertiefung 67c die Klemmstellung. Je nach Stellung der Betätigungshülse 44 greift deren Rastvorsprung 67a lösbar verrastend in entweder die erste Rastvertiefung 67b oder die zweite Rastvertiefung 67c ein.

Im verrasteten Zustand ist die Betätigungshülse 44 axial zumindest im Wesentlichen unbeweglich bezüglich dem Anschlussabschnitt 14 und mithin auch der Spannzange 32 fixiert. Die Rastverbindung der Lösestellung kann dadurch aufgehoben werden, dass auf die Betätigungshülse 44 eine in der Klemmrichtung 46 weisende Drückkraft ausgeübt wird. Die Rastverbindung der Klemmstellung lässt sich dadurch aufheben, dass in die Betätigungshülse 44 eine in der Löserichtung 47 orientierte Zugkraft eingeleitet wird. Die Krafteinleitung erfolgt manuell von außen her, wobei an der Außenfläche der Betätigungshülse 44, insbesondere an deren Außenumfang, eine Angriffsstruktur 68 ausgebildet sein kann, die das Ergreifen bzw. Erfassen mit den Fingern einer Hand und die Krafteinleitung erleichtert. Exemplarisch besteht die Angriffsstruktur 68 aus zwei Oberflächenvertiefungen, die an sich diametral entgegengesetzten Umfangsbereichen der Betätigungshülse 44 ausgebildet sind.

Soll die Anschlussvorrichtung 1 besonders reinigungsfreundlich sein, kann auf eine außen gänzlich glattflächige Betätigungshülse 44 zurückgegriffen werden. Allerdings kann auch dann, zum besseren Einleiten der Betätigungskraft, mindestens eine beispielsweise als Ringnut ausgebildete Vertiefung am Außenumfang ausgebildet sein, an der sich ein Betätigungswerkzeug ansetzen lässt.

Anstelle eines ringförmigen Rastvorsprunges 67a könnten auch ein oder mehrere einzelne, insbesondere über den Umfang verteilte Rastvorsprünge vorhanden sein. Ebenso könnten anstelle mindestens einer der ringförmigen Rastvertiefungen 67b, 67c nur eine oder mehrere, sich lediglich entlang eines Teilumfanges des Anschlussabschnittes 14 erstreckende Rastvertiefungen vorhanden sein.

Die Anordnung des Rastvorsprunges 67a und der Rastvertiefunggen 67b, 67c könnte auch vertauscht sein, so dass an der Betätigungshülse 44 eine Rastvertiefung und am Anschlussabschnitt 14 zwei axial beabstandete Rastvorsprünge ausgebildet sind.

Exemplarisch übernimmt beim Verschieben zwischen den beiden Klemmstellungen der Rastvorsprung 67a die Führungsfunktion für die Betätigungshülse 44, indem er an dem axial zwischen den beiden Rastvertiefungen 67b, 67c angeordneten, insbesondere glattflächigen Längenabschnitt des Basisabschnittes 36 außen entlanggleitet.

Die Rastmittel 67 sind insbesondere so ausgebildet, dass ein hörbares Einrasten stattfindet. Dies gibt dem Benutzer eine zusätzliche Information darüber, dass die gewünschte Stellung der Betätigungshülse 44 erreicht ist.

Die Betätigungshülse 44 ist längenmäßig zweckmäßigerweise so auf die Gestaltung des Anschlussabschnittes 14 abgestimmt, dass sie in der Klemmstellung mit ihrer dem rückseitigen Endbereich 15 des Anschlussabschnittes 14 zugewandten ringförmigen, rückwärtigen Stirnfläche 72 an der nach axial vorne orientierten Schulterfläche 42 anliegt (siehe Figur 4). Auf diese Weise kann in der Klemmstellung der Betätigungshülse 44 ein für das Ansammeln von Verunreinigungen prädestinierter Zwischenraum zwischen der Betätigungshülse 44 und dem rückwärtigen Endbereich 15 des Anschlussabschnittes 14 vermieden werden.

In diesem Zusammenhang ist es besonders vorteilhaft, wenn die radiale Höhe der ringförmigen Abstufung 37 so gewählt ist, dass der sich nach rückwärts an die Schulterfläche 42 anschließende Längenabschnitt 73 des Anschlussabschnittes 14 zumindest im Wesentlichen den gleichen Außendurchmesser aufweist, wie die Betätigungshülse 44 an ihrem rückwärtigen Endbereich 63.

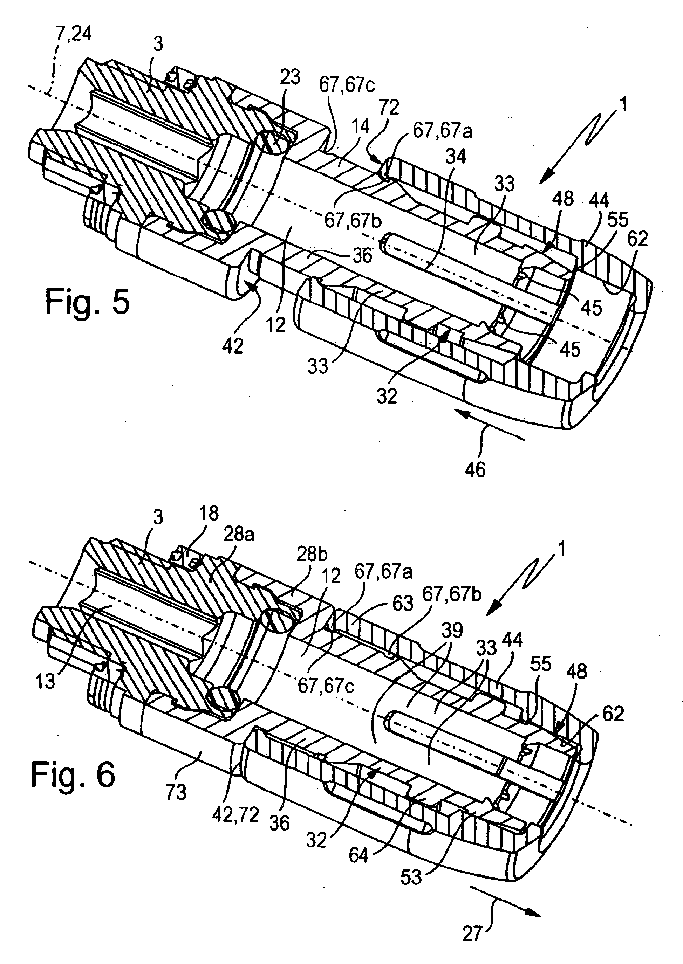

Zwar können die vordere Abschlusskante des Längenabschnitts 73 und die rückwärtige Abschlusskante des rückwärtigen Endbereiches 63 angefast sein, wie dies in Figur 6 bei 74 ersichtlich ist, so dass auch in der Klemmstellung im Übergangsbereich zwischen der Betätigungshülse 44 und dem Anschlussabschnitt 14 eine ringförmige Vertiefung vorliegt. Diese Vertiefung hat allerdings nur eine geringe Tiefe und kann durch entsprechende Gestaltung der Anfasung 74 einen relativ breiten Querschnitt aufweisen, so dass sie sich leicht reinigen lässt. Relevante Schmutzkanten jedenfalls werden vermieden.

Es wäre auch eine dahingehende Gestaltung der Anschlussvorrichtung 1 möglich, dass die Betätigungshülse 44 in der Klemmstellung den Anschlussabschnitt 14 über seine gesamte axiale Länge hinweg oder zumindest soweit übergreift, dass sie mit ihrer rückseitigen Stirnfläche 72 an der Oberfläche des Trägerbauteils 4 zur Anlage kommt. In diesem Fall ist die Schulterfläche 42 also kein direkter Bestandteil der Anschlussvorrichtung 1, sondern am zugeordneten Trägerbauteil 4 ausgebildet. Die Betätigungshülse 44 kann auf diese Weise ähnlich einer Schutzkappe oder Schutzhaube auf den Gehäusekörper 8 aufgesetzt sein.

Zweckmäßigerweise ist die rückwärtige Nutflanke der für das Fixieren in der Klemmstellung verantwortliche zweiten Rastvertiefung 67c unmittelbar von der am Anschlussabschnitt 14 ausgebildeten Schulterfläche 42 gebildet.

Die Spannarme 33 haben in dem sich zwischen dem Basisabschnitt 36 und dem Beaufschlagungsvorsprung 53 erstreckenden Längenabschnitt zweckmäßigerweise eine geringere Wandstärke als der Basisabschnitt 36 selbst. Auf diese Weise ergibt sich eine besonders ausgeprägte Biegeelastizität für die Spannarme 33.

Der Übergangsbereich 39 zwischen den Spannarmen 33 und dem Basisabschnitt 36 ist radial außen zweckmäßigerweise durch eine zu der Längsachse 24 konzentrische konische Ringfläche definiert, die sich in der Klemmrichtung 46 radial erweitert. Sie geht zweckmäßigerweise direkt in die sich optional anschließende, für die Fixierung der Lösestellung verantwortliche erste Rastvertiefung 67b über. Durch diese konische Ringfläche 75 wird eine Gleitfläche oder Rampe definiert, die dafür sorgt, dass die Betätigungshülse 44 bei ihrer von vorne her erfolgenden Steckmontage mit ihrem rückwärtigen Endbereich 63 auf den einen größeren Außendurchmesser aufweisenden Basisabschnitt 36 geleitet wird.

Dadurch, dass die Betätigungshülse 44 in der Lösestellung zweckmäßigerweise axial über die vordere Stirnfläche 35 des Anschlussabschnittes 14 beziehungsweise der Spannzange 32 übersteht, kann der Anschlussabschnitt 14 eine insgesamt relativ kurze Baulänge aufweisen.

Wenn die Betätigungshülse 44 die Klemmstellung einnimmt, sitzt sie zweckmäßigerweise, abgesehen von dem optional vorhandenen Bodenabschnitt 65, über ihre gesamte Länge auf dem Anschlussabschnitt 14.

Vorzugsweise ist die Betätigungshülse 44 so ausgebildet, dass sie sowohl in der Lösestellung als auch in der Klemmstellung die Spannzange 32 über ihre gesamte axiale Länge radial außen umschließt. Auf diese Weise können keine Verunreinigungen durch die schlitzförmigen Zwischenräume 34 in die Ausnehmung 12 eindringen.

Die einzelnen Spannarme 33 sind im Wesentlichen streifenförmig gestaltet und haben, im Querschnitt gesehen, eine bogenförmige Krümmung. Auf diese Weise können sie eine eingesteckte Fluidleitung 2 kompakt umschließen. Durch die Zwischenräume 34 wird die radiale Schwenkbeweglichkeit gewährleistet.

Jeder Spannarm 33 lässt sich gedanklich in einen länglichen Arm-Grundkörper 76 und den daran insbesondere einstückig angeformten mindestens einen Haltevorsprung 45 unterteilen. Der mindestens eine Haltevorsprung 45 hat insbesondere eine sägezahnartige Querschnittsform mit einer zur Mündung 22 weisenden schrägen Vorderfläche 77 und einer entgegengesetzten, wesentlich steileren Rückfläche 78. In Umfangsrichtung kann jeder Haltevorsprung 45 einfach oder mehrfach unterbrochen sein, wobei derartige, optional mögliche Unterbrechungsstellen 78 dafür sorgen, dass beim Verspannen mit der Fluidleitung 2 eine größere Flächenpressung auftritt.

Der Haltevorsprung 45 kann starr am Arm-Grundkörper 76 angeordnet sein. Eine solche Bauform ist in Figuren 3 bis 6 illustriert.

Abweichend hiervon sieht eine in Figuren 7 und 8 illustriert vorteilhafte Weiterbildung vor, dass der mindestens eine Haltevorsprung 45 über mindestens ein Filmscharnier 82 in Achsrichtung der Ausnehmung 12 vor und zurück verschwenkbar aufgehängt ist, wobei diese Schwenkbeweglichkeit in Figur 7 bei 83 durch einen Doppelpfeil angedeutet ist.

Das Filmscharnier 82 besteht zweckmäßigerweise aus einem schmalen, elastisch verformbaren Materialsteg, über den der Haltevorsprung 45 einstückig mit dem Arm-Grundkörper 76 verbunden ist.

Die in der Längsrichtung der Ausnehmung 12 gemessene Länge des Haltevorsprunges 45 ist in seinem dem Arm-Grundkörper 76 zugewandten Fußbereich 84 größer als die entsprechend gemessene Breite des Filmscharniers 82. Somit ragt der Fußabschnitt 84 des Haltevorsprunges 45 rückseitig über das Filmscharnier 82 hinaus.

Beim Einstecken einer Fluidleitung 82 drückt selbige zunächst gegen die Vorderfläche 77 des verschwenkbaren Haltevorsprunges 45 und verschwenkt letzteren nach hinten und zugleich nach radial außen, bis er sich mit seinem Fußabschnitt 84 an der Innenfläche 85 des Arm-Grundkörpers 76 abstützt und dadurch eine weitere Schwenkbewegung verhindert ist. Diese Abstützung bewirkt auch, dass die Relativlage zwischen dem Haltevorsprung 45 und dem Arm-Grundkörper 76 unverändert bleibt, wenn der Spannarm 33 durch die Betätigungskraft F_{B} an die Fluidleitung 2 angedrückt wird, deren Außenfläche in Figuren 7 und 8 strichpunktiert angedeutet ist. Diese Haltefunktion unterscheidet sich von derjenigen des unbeweglichen Haltevorsprunges 45 nicht.

Wenn jedoch an der festgespannten Fluidleitung 2 eine gemäß Pfeil 86 entgegen der Einsteckrichtung 27 wirkende Kraft angreift, wird der mit der Fluidleitung 2 in Eingriff stehende Haltevorsprung 45 mitgenommen und gemäß Pfeil 87 nach vorne verschwenkt, wobei sein Fußabschnitt 84 von der Innenfläche 85 abhebt. Dies führt dazu, dass sich die wirksame radiale Länge des Haltevorsprunges 45 vergrößert und somit die radiale Klemmwirkung auf die Fluidleitung verstärkt wird. Der Haltevorsprung 45 verkeilt sich quasi zunehmend zwischen der Fluidleitung 2 und dem Arm-Grundkörper 76.

Auf diese Weise wird der Fluidschlauch 2 besonders sicher festgehalten. Er kann selbst dann nicht aus der Anschlussvorrichtung 1 herausgezogen werden, wenn bei in Klemmstellung befindlicher Betätigungshülse 44 mit großer Zugkraft an der Fluidleitung 2 angegriffen wird. Außerdem ergibt sich eine verbesserte Sicherheit bei pulsierender Fluidbeaufschlagung der Fluidleitung 2, bei der sich die Fluidleitung 2 eventuell im Innern der Ausnehmung 12 axial hin und her bewegt.

Soll eine erfindungsgemäß ausgebildete Anschlussvorrichtung 1 die Möglichkeit bieten, mehrere Fluidleitungen 2 miteinander zu verbinden, können an dem Gehäusekörper 8 mehrere Anschlussabschnitte ausgebildet sein, denen jeweils in dem erläuterten Sinne eine Betätigungshülse 44 zugeordnet ist. Eine solche Anschlussvorrichtung 1 kann beispielsweise als lineare Schlauchkupplung oder als T-, L- oder Y-Stück ausgeführt sein.

## Patentansprüche

1. Anschlussvorrichtung für eine Fluidleitung, mit einem Gehäusekörper (8), der über mindestens einen sich axial zwischen einem vorderen und einem rückseitigen Endbereich (16, 15) erstreckenden Anschlussabschnitt (14) verfügt, an dessen Vorderseite eine das Einstecken einer anzuschließenden Fluidleitung (2) ermöglichende Ausnehmung (12) ausmündet und dessen vorderer Endbereich (16) als Spannzange (32) mit mehreren federelastisch radial verschwenkbaren Spannarmen (33) ausgebildet ist, wobei auf dem Anschlussabschnitt (14) eine zwischen einer Lösestellung und einer Klemmstellung axial verschiebbare Betätigungshülse (44) angeordnet ist, die beim in einer Klemmrichtung (46) erfolgenden axialen Verschieben in die Klemmstellung derart auf die Spannarme (33) einwirkt, dass selbige zum Festhalten einer eingesteckten Fluidleitung nach radial innen verschwenkt werden, wobei die Betätigungshülse (44) und die Spannarme (33) in ihrer Gestaltung derart aufeinander abgestimmt sind, dass die Klemmrichtung (46) der Verschiebebewegung der Betätigungshülse (44) zum rückseitigen Endbereich (15) des Anschlussabschnittes (14) hin orientiert ist und die Betätigungshülse (44) in der Klemmstellung näher beim rückseitigen Endbereich (15) des Anschlussabschnittes (14) liegt als in der Lösestellung, und wobei die Anschlussvorrichtung (1) über Rastmittel (67) verfügt, durch die die Betätigungshülse (44) in der Klemmstellung und in der Lösestellung durch lösbare Verrastung bezüglich dem Anschlussabschnitt (14) axial fixiert ist, **dadurch gekennzeichnet, dass** als Rastmittel (67) ein einziger am Innenumfang der Betätigungshülse (44) angeordneter Rastvorsprung (67a) und nur zwei am Außenumfang des Anschlussabschnittes (14) ausgebildete Rastvertiefungen (67b, 67c) vorhanden sind, wobei die beiden Rastvertiefungen (67b, 67c) durch einen Bereich, der frei von Rastvertiefungen ist, axial beabstandet zueinander angeordnet sind und die Betätigungshülse (44) durch lösbar verrastendes Eingreifen des einzigen Rastvorsprungs in entweder die eine oder die andere der beiden Rastvertiefungen (67b, 67c) die Klemmstellung oder die Lösestellung einnimmt.

2. Anschlussvorrichtung nach Anspruch 1, **dadurch gekennzeichnet, dass** an der bezüglich der Ausnehmung (12) nach radial außen orientierten Außenseite der Spannarme (33) jeweils mindestens eine sich nach rückwärts und zugleich nach radial außen erstreckende schräge Beaufschlagungsfläche (48) angeordnet ist, auf die Betätigungshülse (44) bei in der Klemmrichtung (46) erfolgenden axialen Verschieben mit jeweils einer an ihrem Innenumfang ausgebildeten Betätigungsschulter (52) einwirkt, wobei die Betätigungsschultern (52) zweckmäßigerweise von Umfangsabschnitten einer an der Betätigungshülse. (44) angeordneten Ringschulter (51) gebildet sind.

3. Anschlussvorrichtung nach Anspruch 2, **dadurch gekennzeichnet, dass** die schrägen Beaufschlagungsflächen (48) an zahnartigen Beaufschlagungsvorsprüngen (53) ausgebildet sind, die an ihrem rückwärtigen Endbereich mit einer rückwärtigen Abschlusskante (54) enden.

4. Anschlussvorrichtung nach Anspruch 3, **dadurch gekennzeichnet, dass** jede Betätigungsschulter (52) zur Vorderseite der Betätigungshülse (44) hin über eine Betätigungskante (55) in eine sich axial erstreckende, nach radial innen weisende Haltefläche (62) übergeht, wobei die Betätigungskanten (55) in der Klemmstellung der Betätigungshülse (44) die Abschlusskanten (54) der Beaufschlagungsvorsprünge (53) zur Rückseite des Anschlussabschnittes (14) hin passiert haben und die Abschlusskanten (54) durch die sie übergreifenden Halteflächen (62) nach radial innen gedrückt festgehalten werden.

5. Anschlussvorrichtung nach Anspruch 4, **dadurch gekennzeichnet, dass** die Halteflächen (62) in Gestalt von Umfangsabschnitten der Innenmantelfläche eines Hohlzylinders gestaltet sind, wobei zweckmäßigerweise alle Halteflächen (62) gemeinsame Bestandteile einer kreiszylindrischen Ringfläche sind.

6. Anschlussvorrichtung nach einem der Ansprüche 2 bis 5, **dadurch gekennzeichnet, dass** mindestens ein Spannarm (33) an seiner bezüglich der Ausnehmung (12) nach radial außen orientierten Außenseite mindestens einen der schrägen Beaufschlagungsfläche (48) zur Rückseite des Anschlussabschnittes (14) hin mit Abstand vorgelagerten Stabilisierungsvorsprung (64) für die verschiebbare Betätigungshülse (44) aufweist.

7. Anschlussvorrichtung nach einem der Ansprüche 1 bis 6, **dadurch gekennzeichnet, dass** die Betätigungshülse (44) becherförmig mit einem mittig durchbrochenen Bodenabschnitt (65) ausgebildet ist und von axial vorne her auf den Anschlussabschnitt (14) aufgesteckt ist, so dass die Wandung des Bodenabschnittes (65) den vorderen Stirnflächen der Spannarme (33) vorgelagert ist und die Bodendurchbrechung (66) mit der Mündung (22) der den Anschlussabschnitt (14) durchsetzenden Ausnehmung (12) fluchtet.

8. Anschlussvorrichtung nach einem der Ansprüche 1 bis 7, **dadurch gekennzeichnet, dass** der Anschlussabschnitt einen sich rückseitig an die Spannzange (32) anschließenden ungeschlitzten Basisabschnitt (36) aufweist.

9. Anschlussvorrichtung nach Anspruch 8, **dadurch gekennzeichnet, dass** die beiden Rastvertiefungen (67b, 67c) am Außenumfang des Basisabschnittes (36) ausgebildet sind.

10. Anschlussvorrichtung nach Anspruch 8 oder 9, **dadurch gekennzeichnet, dass** die Betätigungshülse (44) unabhängig von ihrer Axialposition den Basisabschnitt (36) umgreift und bei ihrem axialen Verschieben durch Zusammenwirken mit dem Basisabschnitt (36) verschiebbar geführt ist.

11. Anschlussvorrichtung nach einem der Ansprüche 1 bis 10, **dadurch gekennzeichnet, dass** die Betätigungshülse (44) eine derartige Länge aufweist, dass sie bei Einnahme der Klemmstellung mit ihrer dem rückwärtigen Endbereich (15) des Anschlussabschnittes (14) zugeordneten rückseitigen Stirnfläche (72) an einer ihr zugewandten, bezüglich dem Anschlussabschnitt (14) ortsfesten Schulterfläche (42) anliegt.

12. Anschlussvorrichtung nach Anspruch 11, **dadurch gekennzeichnet, dass** der Anschlussabschnitt (14) in dem sich rückseitig an die Spannzange (32) anschließenden Bereich an seinem Außenumfang eine die Schulterfläche (42) bildende ringförmige Abstufung (37) aufweist.

13. Anschlussvorrichtung nach Anspruch 12, **dadurch gekennzeichnet, dass** die radiale Höhe der ringförmigen Abstufung (37) so gewählt ist, dass der sich rückseitig an die Schulterfläche (42) anschließende Längenabschnitt (73) des Anschlussabschnittes (14) zumindest im Wesentlichen den gleichen Außendurchmesser aufweist wie die Betätigungshülse (44) in dem sich an ihre rückseitige Stirnfläche (72) anschließenden Bereich.

14. Anschlussvorrichtung nach einem der Ansprüche 1 bis 13, **dadurch gekennzeichnet, dass** sich rückseitig an den Anschlussabschnitt (14) ein zur Befestigung der Anschlussvorrichtung an einem Trägerbauteil (4) geeigneter Befestigungsabschnitt (3) anschließt, dessen Außendurchmesser zweckmäßigerweise geringer ist als derjenige des Anschlussabschnittes (14) in seinem rückwärtigen Endbereich (15).

15. Anschlussvorrichtung nach einem der Ansprüche 1 bis 14, **dadurch gekennzeichnet, dass** die Spannarme (33) an ihrer der Ausnehmung zugewandten Innenseite jeweils mindestens einen nach radial innen ragenden Haltevorsprung (45) aufweisen, der mit der angeschlossenen Fluidleitung (2) zusammenwirkt und der zweckmäßigerweise über mindestens ein Filmscharnier (82) in der Längsrichtung der Ausnehmung (12) vor und zurück verschwenkbar aufgehängt ist.

## Claims

1. Connecting device for a fluid line, comprising, comprising a housing body (8) having at least one connecting section (14), which extends axially between a front and a rear end region (16, 15), at the front side of which a recess (12) facilitating the insertion of a fluid line (2) terminates and the front end region (16) of which is designed as a collet chuck (32) with a plurality of resilient, radially pivotable clamping arms (33), wherein an operating sleeve (44), which is axially movable between a release position and a clamping position and which, when axially moved into the clamping position in a clamping direction (46), acts on the clamping arms (33) in such a way that they are pivoted radially inwards to secure an inserted fluid line, is mounted on the connecting section (14), wherein the operating sleeve (44) and the clamping arms (33) are matched to one another in their design in such a way that the clamping direction (46) of the movement of the operating sleeve (44) is oriented towards the rear end region (15) of the connecting section (14) and the operating sleeve (44) is closer to the rear end region (15) of the connecting section (14) in the clamping position than in the release position, and wherein the connecting device (1) is provided with latching means (67), by which the operating sleeve (44) is axially located in the clamping position and in the release position by releasable latching relative to the connecting section (14), **characterised in that**, as latching means, a single latching projection (67a) located on the inner circumference of the operating sleeve (44) and only two latching recesses (67b, 67c) formed on the outer circumference of the connecting section (14) are provided, wherein the two latching recesses (67b, 67c) are axially spaced from one another by a region free of latching recesses, and wherein the operating sleeve (44) adopts the clamping position or the release position by a releasably latching engagement of the single latching projection with either one or the other of the two latching recesses (67b, 67c).

2. Connecting device according to claim 1, **characterised in that** at least one inclined application surface (48), which extends towards the rear and at the same time radially outwards and on which the operating sleeve (44) acts with an operating shoulder (52) formed on its inner circumference when being axially moved in the clamping direction (46), is provided on the outside of each of the clamping arms (33), which is oriented radially outwards relative to the recess (12), the operating shoulders (52) being expediently represented by circumferential sections of an annular shoulder (51) provided on the operating sleeve (44).

3. Connecting device according to claim 2, **characterised in that** the inclined application surfaces (48) are formed on tooth-like application projections (53), which end with a rear terminating edge (54) in their rear end region.

4. Connecting device according to claim 3, **characterised in that** each operating shoulder (52) merges into an axially oriented, radially inwardprojecting holding surface (62) towards the front of the operating sleeve (44) via an operating edge (55), wherein the operating edges (55) have passed the terminating edges (54) of the application projections (53) towards the rear of the connecting section (14) in the clamping position of the operating sleeve (44) and the terminating edges (54) are pushed radially inwards and held by the overlapping holding surfaces (62).

5. Connecting device according to claim 4, **characterised in that** the holding surfaces (62) are designed in the shape of circumferential sections of the inner circumferential surface of a hollow cylinder, all holding surfaces (62) expediently being common components of a circular cylindrical annular surface.

6. Connecting device according to any of claims 2 to 5, **characterised in that** at least one clamping arm (33) has, on its outside oriented radially outwards relative to the recess (12), at least one stabilising projection (64) for the movable operating sleeve (44), which stabilising projection (64) is located at a distance in front of the inclined application surface (48) towards the rear of the connecting section (14).

7. Connecting device according to any of claims 1 to 6, **characterised in that** the operating sleeve (44) is designed to be cup-shaped with a base section (65) with a central aperture and is pushed onto the connecting section (14) axially from the front, so that the wall of the base section (65) is located in front of the front end faces of the clamping arms (33) and the base aperture (66) is aligned to the orifice (22) of the recess (12) passing through the connecting section (14).

8. Connecting device according to any of claims 1 to 7, **characterised in that** the connecting section comprises an unslotted base section (36) adjoining the collet chuck (32) at the rear.

9. Connecting device according to claim 8, **characterised in that** the two latching recesses (67a, 67c) are formed on the outer circumference of the base section (36).

10. Connecting device according to claim 8 or 9, **characterised in that** the operating sleeve (44) encompasses the base section (36) irrespective of its axial position and is in its axial movement slidably guided by interacting with the base section (36).

11. Connecting device according to any of claims 1 to 10, **characterised in that** the operating sleeve (44) has such a length that, when adopting the clamping position, it bears against a facing shoulder surface (42), which is stationary relative to the connecting section (14), with its rear end face (71) assigned to the rear end region (15) of the connecting section (14).

12. Connecting device according to claim 11, **characterised in that** the connecting section (14) has, in the region adjoining the collet chuck (32) at the rear, on its outer circumference an annular step (37) forming the shoulder surface (42).

13. Connecting device according to claim 12, **characterised in that** the radial height of the annular step (37) is chosen such that the longitudinal section (73) of the connecting section (14) which adjoins the shoulder surface (42) at the rear has at least substantially the same outer diameter as the operating sleeve (44) in the region adjoining its rear end face (72).

14. Connecting device according to any of claims 1 to 13, **characterised in that** the connecting section (14) is adjoined at the rear by a mounting section (3) suitable for mounting the connecting device on a support component (4), the outer diameter of which mounting section (3) is expediently smaller than that of the connecting section (14) in its rear end region (15).

15. Connecting device according to any of claims 1 to 14, **characterised in that** each of the clamping arms (33) has on its inside facing the recess at least one holding projection (45) projecting radially inwards, which acts together with the connected fluid line (2) and which is expediently suspended via at least one film hinge (82) for swivelling forwards and backwards in the longitudinal direction of the recess (12).

## Revendications

1. Dispositif de raccordement pour une conduite de fluide, comprenant un corps de boîtier (8), qui dispose d'au moins une section de raccordement (14) s'étendant de manière axiale entre une zone d'extrémité avant et une zone d'extrémité arrière (16, 15), au niveau du côté avant de laquelle section de raccordement un évidement (12) permettant l'emboîtement d'une conduite de fluide (2) à raccorder débouche et dont la zone d'extrémité avant (16) est réalisée sous la forme d'une pince de serrage (32) pourvue de plusieurs bras de serrage (33) pouvant pivoter radialement de manière élastique, sachant qu'une douille d'actionnement (44) pouvant être déplacée de manière axiale par coulissement entre une position de déblocage et une position de blocage est disposée sur la section de raccordement (14), laquelle douille d'actionnement agit sur les bras de serrage (33) lors du déplacement axial par coulissement, effectué dans une direction de blocage (46), dans la position de blocage de telle manière que lesdits bras de serrage sont pivotés vers l'intérieur radialement afin d'immobiliser une conduite de fluide emboîtée, sachant que la douille d'actionnement (44) et les bras de serrage (33) sont adaptés, eu égard à leur configuration, les uns aux autres de telle manière que la direction de blocage (46) du déplacement par coulissement de la douille d'actionnement (44) est orientée en direction de la zone d'extrémité arrière (15) de la section de raccordement (14), et en ce que la douille d'actionnement (44) se trouve davantage à proximité de la zone d'extrémité arrière (15) de la section de raccordement (14) dans la position de blocage que dans la position de déblocage, et sachant que le dispositif de raccordement (1) dispose de moyens d'enclenchement (67), par lesquels la douille d'actionnement (44) est fixée de manière axiale par rapport à la section de raccordement (14) dans la position de blocage et dans la position de déblocage par un enclenchement amovible, **caractérisé en ce que** sont présents, en tant que moyens d'enclenchement (67), une unique partie faisant saillie d'enclenchement (67a) disposée au niveau de la périphérie intérieure de la douille d'actionnement (44) et uniquement deux renfoncements d'enclenchement (67b, 67c) réalisés au niveau de la périphérie extérieure de la section de raccordement (14), sachant que les deux renfoncements d'enclenchement (67b, 67c) sont disposés de manière espacée axialement l'un de l'autre par une zone, qui est dépourvue de renfoncements d'enclenchement, et sachant que la douille d'actionnement (44) adopte la position de blocage ou la position de déblocage par un engrènement à enclenchement amovible de l'unique partie faisant saillie d'enclenchement avec l'un ou l'autre des renfoncements d'enclenchement (67b, 67c) au nombre de deux.

2. Dispositif de raccordement selon la revendication 1, **caractérisé en ce que** respectivement au moins une surface d'application de contrainte (48) inclinée s'étendant vers l'arrière et, dans le même temps, vers l'extérieur radialement, est disposée au niveau du côté extérieur, orienté vers l'extérieur radialement par rapport à l'évidement (12), des bras de serrage (33), laquelle surface d'application de contrainte agit sur la douille d'actionnement (44), lors du déplacement axial par coulissement effectué dans la direction de blocage (46), avec respectivement un épaulement d'actionnement (52) réalisé au niveau de la périphérie intérieure de cette dernière, sachant que les épaulements d'actionnement (52) sont formés de manière appropriée par des sections périphériques d'un épaulement annulaire (51) disposé au niveau de la douille d'actionnement (44).

3. Dispositif de raccordement selon la revendication 2, **caractérisé en ce que** les surfaces d'application de contrainte (48) inclinées sont réalisées au niveau de parties faisant saillie d'application de contrainte (53) dentées, lesquelles se terminent, au niveau de leur zone d'extrémité arrière, par une arête de bordure arrière (54).

4. Dispositif de raccordement selon la revendication 3, **caractérisé en ce que** chaque épaulement d'actionnement (52) devient, en direction du côté avant de la douille d'actionnement (44), en passant par une arête d'actionnement (55), une surface de maintien (62) s'étendant de manière axiale, dirigée vers l'intérieur radialement, sachant que les arêtes d'actionnement (55) ont passé, dans la position de blocage de la douille d'actionnement (44), les arêtes de bordure (54) des parties faisant saillie d'application de contrainte (53) en direction du côté arrière de la section de raccordement (14) et que les arêtes de bordure (54) sont immobilisées par une pression vers l'intérieur radialement par les surfaces de maintien (62) les recouvrant.

5. Dispositif de raccordement selon la revendication 4, **caractérisé en ce que** les surfaces de maintien (62) sont configurées sous la forme de sections périphériques de la surface enveloppante intérieure d'un cylindre creux, sachant que toutes les surfaces de maintien (62) constituent de manière appropriée des parties intégrantes communes d'une surface annulaire cylindrique circulaire.

6. Dispositif de raccordement selon l'une quelconque des revendications 2 à 5, **caractérisé en ce qu'**au moins un bras de serrage (33) présente, au niveau de son côté extérieur orienté vers l'extérieur radialement par rapport à l'évidement (12), au moins une partie faisant saillie de stabilisation (64) installée en amont de la surface d'application de contrainte (48) inclinée à une certaine distance en direction du côté arrière de la section de raccordement (14), pour la douille d'actionnement (44) pouvant être déplacée par coulissement.

7. Dispositif de raccordement selon l'une quelconque des revendications 1 à 6, **caractérisé en ce que** la douille d'actionnement (44) est réalisée de manière à présenter une forme de pot avec une section de fond (65) transpercée au centre et est enfilée, depuis l'avant axialement, sur la section de raccordement (14) de sorte que la paroi de la section de fond (65) est installée en amont des surfaces frontales avant des bras de serrage (33) et que le perçage de fond (66) est aligné avec l'embouchure (22) de l'évidement (12) traversant la section de raccordement (14).

8. Dispositif de raccordement selon l'une quelconque des revendications 1 à 7, **caractérisé en ce que** la section de raccordement présente une section de base (36) non fendue se raccordant côté arrière à la pince de serrage (32).

9. Dispositif de raccordement selon la revendication 8, **caractérisé en ce que** les deux renfoncements d'enclenchement (67b, 67c) sont réalisés au niveau de la périphérie extérieure de la section de base (36).

10. Dispositif de raccordement selon la revendication 8 ou 9, **caractérisé en ce que** la douille d'actionnement (44) entoure, indépendamment de sa position axiale, la section de base (36) et est guidée, lors de son déplacement axial par coulissement, de manière à pouvoir être déplacée par coulissement par l'interaction avec la section de base (36).

11. Dispositif de raccordement selon l'une quelconque des revendications 1 à 10, **caractérisé en ce que** la douille d'actionnement (44) présente une longueur telle qu'elle repose, en adoptant la position de blocage, par sa surface frontale (72) arrière associée à la zone d'extrémité (15) arrière de la section de raccordement (14), au niveau d'une surface d'épaulement (42) tournée vers ladite face frontale, stationnaire par rapport à la section de raccordement (14).

12. Dispositif de raccordement selon la revendication 11, **caractérisé en ce que** la section de raccordement (14) présente, dans la zone se raccordant côté arrière à la pince de serrage (32), au niveau de sa périphérie extérieure, un palier (37) de forme annulaire formant la surface d'épaulement (42).

13. Dispositif de raccordement selon la revendication 12, **caractérisé en ce que** la hauteur radiale du palier (37) présentant une forme annulaire est choisie de telle manière que la section longitudinale (73) se raccordant côté arrière à la surface d'épaulement (42), de la section de raccordement (14) présente au moins sensiblement le même diamètre extérieur que la douille d'actionnement (44) dans la zone se raccordant au niveau de sa surface frontale arrière (72).

14. Dispositif de raccordement selon l'une quelconque des revendications 1 à 13, **caractérisé en ce qu'**une section de fixation (3) adaptée aux fins de la fixation du dispositif de raccordement au niveau d'un composant de support (4) se raccorde côté arrière à la section de raccordement (14), le diamètre extérieur de ladite section de fixation étant inférieur de manière appropriée à celui de la section de raccordement (14) dans sa zone d'extrémité arrière (15).

15. Dispositif de raccordement selon l'une quelconque des revendications 1 à 14, **caractérisé en ce que** les bras de serrage (33) présentent, au niveau de leur côté intérieur tourné vers l'évidement, respectivement au moins une partie faisant saillie de maintien (45) dépassant vers l'intérieur radialement, laquelle coopère avec la conduite de fluide (2) raccordée et est accrochée de manière appropriée par l'intermédiaire au moins d'une charnière à film (82) dans le sens longitudinal de l'évidement (12), de manière à effectuer des mouvements de pivotement vers l'avant et vers l'arrière.
